# EUROPEAN PATENT SPECIFICATION

(11) **EP 4 399 151 B1**
(45) Date of publication and mention of the grant of the patent: **07.10.2026**
(21) Application number: 22865922.3
(22) Date of filing: 05.08.2022
(51) Int. Cl.: B64D 1/12, B64D 1/14, B64C 39/02, B64D 1/22, G01V 1/09, G01V 1/147, G01V 1/16, G01V 1/20, G01V 1/38, B64D 1/02

(54) **SEISMIC WEIGHT DROPPER ARRANGEMENT FOR A DRONE**
ANORDNUNG EINER SEISMISCHEN GEWICHTSTROPFER FÜR EINE DROHNE
AGENCEMENT DE LÂCHÉ DE MASSE SISMOMÉTRIQUE POUR UN DRONE

(30) Priority: 07.09.2021 AU 2021902890
(43) Date of publication of application: 17.07.2024
(73) Proprietor: Mohideen, Farlin Anooz, Belmont WA 6104 (AU)
(72) Inventor: Mohideen, Farlin Anooz, Belmont WA 6104 (AU)
(74) Representative: O'Kane, Jessica Ann
(86) International application number: PCT/AU2022/050851
(87) International publication number: WO 2023/035024

(56) References cited:
- WO-A1-2020/234427
- US-A- 3 542 151
- US-A- 3 542 151
- US-A- 4 124 090
- US-A1- 2002 163 857
- US-A1- 2021 116 590
- US-B1- 10 071 804
- US-B1- 10 071 804

## Description

### TECHNICAL FIELD

This invention broadly relates to the field of geophysics and seismic surveying and more specifically to a seismic weight dropper arrangement for a drone, a drone for seismic surveying and an associated method of seismic surveying.

### BACKGROUND ART

The following discussion of the background art is intended to facilitate an understanding of the present invention only. The discussion is not an acknowledgement or admission that any of the material referred to is or was part of the common general knowledge as at the priority date of the application.

Applicant has developed technologies for deployment of instruments, such as geophones, by means of drones, as described in **International Patent Application nos.** PCT/AU2022/050785 **and** PCT/AU2022/050847**.** Such technologies find particular application in the autonomous dispersal and installation of geophones across an area for seismic surveying, or the like.

As known in the art of seismic surveying, a so-called seismic source is a device that generates controlled seismic energy used to perform both reflection and refraction seismic surveys. A seismic source can be simple, such as an explosive charge, or it can use more sophisticated technology, such as a specialised air gun or a weight dropper.

Seismic sources are generally used to generate seismic waves, which travel through the earth. Some of the waves then reflect and refract and are recorded by receivers, such as geophones.

Seismic sources may be used to investigate shallow subsoil structure, for engineering site characterisation, or to study deeper structures, such as in the search for petroleum and mineral deposits, or to map subsurface faults or for other scientific investigations. The returning signals from the sources are detected by seismic sensors (geophones or hydrophones) in known locations relative to the position of the source. The recorded signals are then subjected to specialist processing and interpretation to yield comprehensible information about the subsurface. US4124090A describes a seismic weight generator and apparatus which can be transported and selectively dropped using a truck or other vehicle. The weight is non-rigid to avoid bouncing and hence multiple impacts on the surface. The apparatus comprises a cable and pully mechanism which can raise and retain the weight, and in embodiments which include a propelling mechanism, a sleeve contains a coil spring which on actuation of a trigger mechanism will accelerate the non-rigid weight toward the impact area. US10071804B1 describes unmanned ariel vehicles having a lowering mechanism which avoids package sway.

The current invention was conceived as part of Applicant's suite of drone-based survey technologies, particularly to provide a suitable weight dropper seismic source which is re-useable, configurable and drone-portable and manageable.

### SUMMARY OF THE INVENTION

The skilled addressee is to appreciate that, while a primary implementation of the arrangement described herein will be via drone, i.e. unmanned aerial vehicle, the arrangement may also be adapted for use with manned aircraft.

Similarly, reference herein to a 'drone' broadly includes reference to any suitable unmanned aerial vehicle that may be guided remotely and/or operate autonomously to reach a particular geographic location with a predetermined load or cargo, such as a multi-copter, or the like.

According to a first aspect of the invention there is provided a seismic weight dropper arrangement for a drone, as defined in claim 1.

Optional features of the invention are set out in the dependent claims.

According to a second aspect of the invention there is provided a drone configured for seismic surveying, as defined in claim 12.

According to a third aspect of the invention there is provided a method of seismic surveying, as defined in claim 13.

### BRIEF DESCRIPTION OF THE DRAWINGS

The description will be made with reference to the accompanying drawings in which:

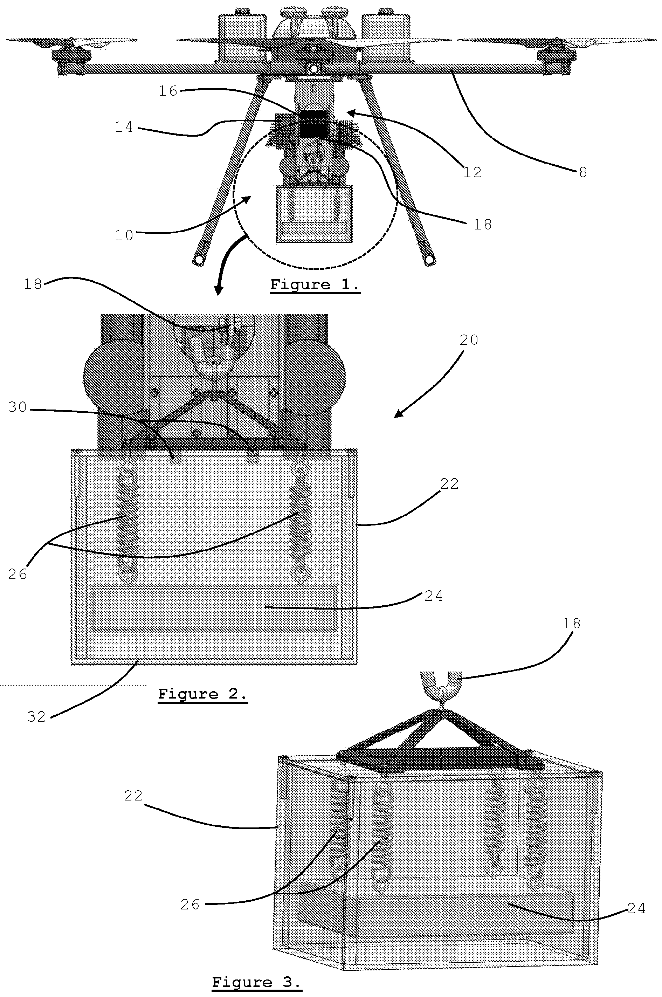

**Figure 1** is a diagrammatic front-view representation of a seismic weight dropper arrangement for a drone, in accordance with an aspect of the present invention;
**Figure 2** is a diagrammatic closer-view representation of a seismic source assembly of the weight dropper arrangement of Figure 1;
**Figure 3** is diagrammatic perspective-view representation of a housing of the seismic source assembly of the weight dropper arrangement of Figure 1;

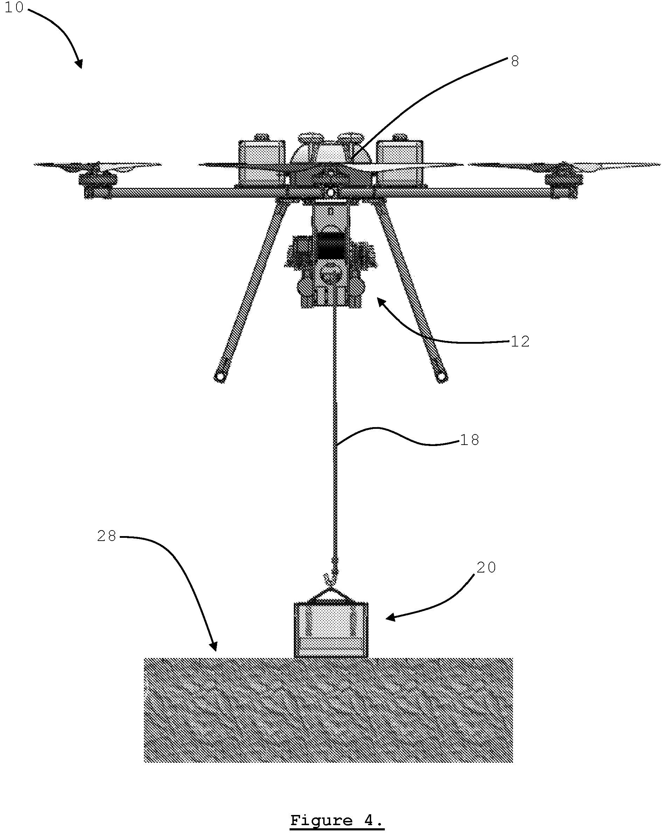

**Figure 4** is a diagrammatic front-view representation of a drone using the seismic weight dropper arrangement of figure 1, in accordance with an aspect of the present invention;

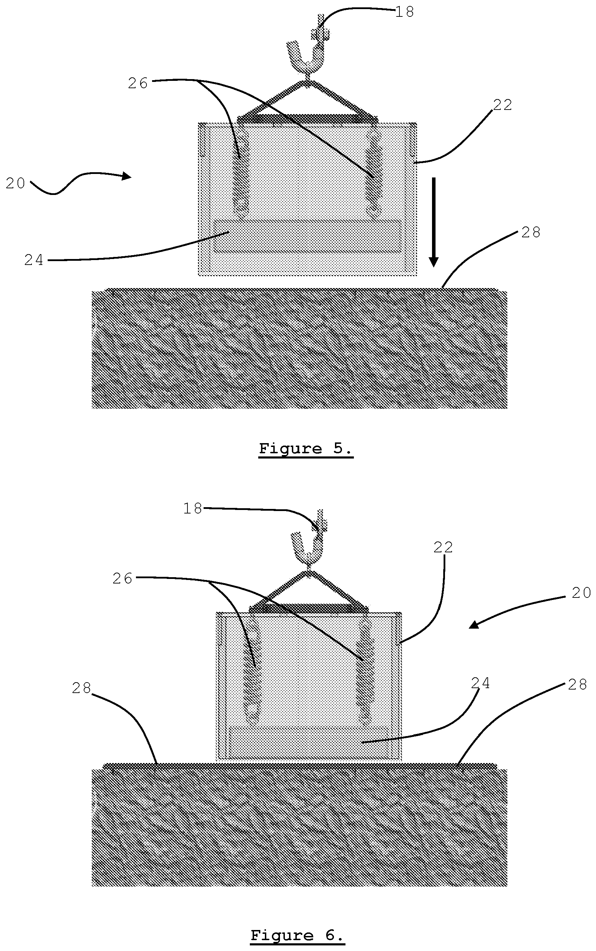

**Figure 5** is a diagrammatic front-view representation of the seismic source assembly just before impacting a surface;
**Figure 6** is a diagrammatic front-view representation of the seismic source assembly of Figure 5 impacting a surface; and
**Figure 7** is a diagrammatic representation of a geophone array installed via drone in which the seismic weight dropper arrangement of Figure 1 finds particular application.

### DETAILED DESCRIPTION OF EMBODIMENTS

Further features of the present invention are more fully described in the following description of several non-limiting embodiments thereof. This description is included solely for the purposes of exemplifying the present invention to the skilled addressee. It should not be understood as a restriction. The invention is set out in the appended claims.

In the figures, incorporated to illustrate features of the example embodiment or embodiments, like reference numerals are used to identify like parts throughout. Additionally, features, mechanisms and aspects well-known and understood in the art will not be described in detail, as such features, mechanisms and aspects will be within the understanding of the skilled addressee.

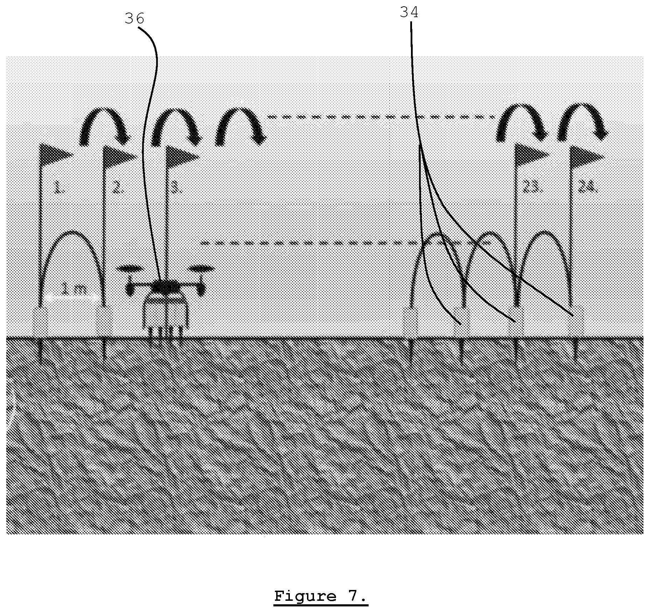

The present invention broadly provides for a seismic weight dropper arrangement 10 for a drone 8, as well as such a drone 8 fitted with arrangement 10. The arrangement generally includes a winch assembly 12 and a seismic source assembly 20, as described below. Arrangement 10 finds particular application in providing an autonomous means whereby a seismic source in the form of a weight dropper can be provided to an array of geophones 34 (as shown in Figure 7).

As described in Applicant's International Patent Application nos. PCT/AU2022/050785 and PCT/AU2022/050847, geophones 34 can be autonomously deployed by means of drones for conducting seismic surveys. The arrangement 10 of the present invention is able to function as a controllable and configurable seismic source to facilitate such seismic surveys according to requirements.

Importantly, the skilled addressee is to appreciate that due to typical size and weight limitations in payload capacity for most drones, the arrangement 10 includes a specifically-configured seismic source assembly 20 of manageable size and weight for a drone, whilst being able to serve as a reliable and useful seismic source.

The seismic weight dropper arrangement 10 of the present invention typically comprises a winch assembly 12 which is operatively attachable to a drone 8. The winch assembly 12, in turn, comprises an actuator 14 and a suitable spool 16 with a cable 18 windable thereon. The skilled addressee is to appreciate that such a cable 18 may take various forms, including wire, rope, line, etc.

Typically, the winch assembly 12 is arranged in signal communication with a controller (not shown) of the drone 8 so that such a controller is able to control the actuator 14, as required. Such an actuator 14 may take various forms, requirements depending, but typically comprises an electromechanical actuator, such as an electrical motor, for operatively rotating the spool 16 in order to wind the cable 18 onto said spool 16. The actuator 14 may also include a gearing arrangement (not shown) to facilitate torque transfer between the actuator 14 and spool 16.

In one embodiment, the winch assembly 12 further comprises a clutch and/or brake to control rotation of the spool 16, as desired. For example, such a clutch and/or brake can be used to release or eject the seismic source assembly 20, as described in more detail below.

In the exemplified embodiment, the winch assembly 12 is attachable to the drone 8 so that the winch assembly 12 is suspended below the drone 8 to facilitate unimpeded ejection of the seismic source assembly 20 under the influence of gravity. Of course, variations hereon are possible and anticipated.

The seismic source assembly 20 broadly comprises a housing 22 and a mass 24 suspended within said housing 22 via at least one resiliently elastic biasing element 26. The resiliently elastic biasing element 26 typically comprises a coil spring, or the like, but variations hereon are possible and within the scope of the present invention. In the exemplified embodiment, mass 24 is suspended within housing 22 by means of four springs, as shown, but variations are possible.

In one embodiment, the housing 22 comprises a metallic housing, but such a configuration is non-limiting. Similarly, in one embodiment the mass 24 comprises a predetermined metallic mass, but variations are possible. In the exemplified embodiment, the housing 22 and mass 24 are configured via suitable shape and dimensions to minimise lateral movement of the mass 24 within the housing 22, i.e. the mass 24 is generally free to move up and down within the housing 22, rather than side to side. The housing 22 may also include an impact surface 32 at a bottom thereof, either internally and/or externally.

The skilled addressee is to appreciate that the resiliently elastic biasing element 26 is configured or selected to have a predetermined modulus of elasticity, i.e. Young's modulus, to facilitate the mass 24 impacting the housing 22 when the housing 22 is dropped and impacts a surface 28 after such ejection from a predetermined height above said surface 28. In one embodiment, the modulus of elasticity is predetermined to facilitate repeated impacts of the mass 24 against the housing 22 when the housing 22 impacts the surface 28. In this manner, the impact of the mass 24 against the housing 22 provides a seismic source for seismic surveying.

Importantly, such specific configuration of the seismic source assembly 20 having the housing 22 with the mass 24 suspended within said housing 22 via at least one resiliently elastic biasing element 26 having a predetermined modulus of elasticity provides for a drone-portable and manageable seismic source which is also re-useable as a drone moves to different areas, whilst also being enabled to provide configurable seismic impacts to facilitate surveying.

For example, via suitable selection of the housing 22 material, size and weight, mass 24 material, size and weight, along with the modulus of elasticity of the element(s) 26, it is possible to configure a seismic source of known magnitude when released from a specific height by the drone 8. Additionally, via suitable configuration, the mass 24 may also strike the housing 22 a predetermined number of times and at predetermined magnitudes at impact, thereby allowing repeatable and accurate seismic surveying over an area. Additionally, such specific and configurable aspects of the seismic source assembly 20 allows seismic surveying to be performed in manners not possible via conventional methods.

In one embodiment, the arrangement 10 also includes a lock assembly 30 which is configured to releasably and selectively lock the seismic source assembly 20 to the winch assembly 12. In the exemplified embodiment, the lock assembly 30 comprises at least one solenoid lock under control of the controller.

Importantly, in use, the arrangement 10 features the seismic source assembly 20 fast with the cable 18 of the winch assembly 12, with the actuator 14 configured selectively to eject the seismic source assembly 20 from the drone 8 under the influence of gravity. For example, via selective release of a suitable brake and/or clutch and disengagement of the lock assembly 30, the seismic source assembly 20 can be ejected under the influence of gravity, i.e. dropped, when the drone is at a predetermined height above surface 28.

The present invention also broadly provides for an associated method of seismic surveying. Such a method typically comprises the steps of providing a drone 8 fitted with arrangement 10, selectively ejecting the seismic source assembly 20 from the winch assembly 12 when said drone 8 is at a predetermined height above a surface 28 so that the housing 22 impacts said surface 28, causing the mass 24 to impact the housing 22, and taking seismic measurements.

In the manner described, a drone 8 is able to autonomously perform seismic surveying by ascending to a specific height above a surface 28, e.g. 50m, ejecting or releasing the seismic source assembly 20 to fall under the influence of gravity so that mass 24 impacts the housing 22 when said housing impacts the surface 28, thereby providing a seismic source, as required.

Applicant believes it particularly advantageous that the present invention provides for arrangement 10 able to facilitate automated seismic surveying by providing a seismic source deployable, as required, via a drone. Additionally, the configurable seismic source assembly 20 of arrangement 10 allows a drone-portable and manageable seismic source which is also re-useable over an area, as required. Seismic source assembly 20 is further configurable to provide specific and predetermined impact magnitudes and number of impacts, thereby enabling accurate seismic surveying to be conducted.

Modifications or changes may be made without departing from the invention, which is defined by the appended claims.

The use of the terms "a", "an", "said", "the", and/or similar referents in the context of describing various embodiments (especially in the context of the claimed subject matter) are to be construed to cover both the singular and the plural, unless otherwise indicated herein or clearly contradicted by context. The terms "comprising," "having," "including," and "containing" are to be construed as openended terms (i.e., meaning "including, but not limited to,") unless otherwise noted. As used herein, the term "and/or" includes any and all combinations of one or more of the associated listed items. No language in the specification should be construed as indicating any non-claimed subject matter as essential to the practice of the claimed subject matter.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

It is to be appreciated that reference to "one example" or "an example" of the invention, or similar exemplary language (e.g., "such as") herein, is not made in an exclusive sense. Various substantially and specifically practical and useful exemplary embodiments of the claimed subject matter are described herein, textually and/or graphically, for carrying out the claimed subject matter.

Accordingly, one example may exemplify certain aspects of the invention, whilst other aspects are exemplified in a different example. These examples are intended to assist the skilled person in performing the invention and are not intended to limit the overall scope of the invention in any way unless the context clearly indicates otherwise. Variations (e.g. modifications and/or enhancements) of one or more embodiments described herein might become apparent to those of ordinary skill in the art upon reading this application. The inventor(s) expects skilled artisans to employ such variations insofar as they fall within the scope of the appended claims.

Any method steps, processes, and operations described herein are not to be construed as necessarily requiring their performance in the particular order discussed or illustrated, unless specifically identified as an order of performance. It is also to be understood that additional steps may be employed.

## Claims

1. A seismic weight dropper arrangement (10) for a drone (8), said arrangement comprising:
a winch assembly (12) attachable to the drone and comprising an actuator (14) and a spool (16) with a cable (18) windable thereon; and
a configurable seismic source assembly (20) comprising a housing (22) and a mass (24) suspended within said housing via at least one resiliently elastic biasing element (26) which has a predetermined modulus of elasticity to facilitate the mass impacting the housing with predetermined impact magnitudes and number of impacts when the housing impacts a surface(28), the housing and mass further configured to minimise lateral movement of the mass within the housing;
wherein the seismic source assembly is fast with the cable and the actuator is configured selectively to eject said seismic source assembly from the drone under the influence of gravity from a predetermined height to facilitate the mass impacting the housing when the housing impacts the surface after such ejection.

2. The arrangement of claim 1, wherein the winch assembly is configured to be arranged in signal communication with a controller of the drone, wherein the actuator is configured to be controlled by the controller.

3. The arrangement of either of claims 1 or 2, wherein the winch assembly is configured to be attached to the drone so that the winch assembly is suspended below such drone to facilitate unimpeded ejection of the seismic source assembly under the influence of gravity.

4. The arrangement of any of claims 1 to 3, wherein the actuator comprises an electromechanical actuator, such as an electrical motor, for operatively rotating the spool in order to wind the cable onto said spool.

5. The arrangement of any of claims 1 to 4, wherein the actuator includes a gearing arrangement to facilitate torque transfer between the actuator and spool.

6. The arrangement of any of claims 1 to 5, wherein the winch assembly comprises a clutch or brake to control rotation of the spool.

7. The arrangement of any of claims 1 to 6, wherein the seismic source assembly includes an impact surface at a bottom of the housing.

8. The arrangement of any of claims 1 to 7, wherein the housing comprises a metallic housing and the mass comprises a metallic predetermined mass.

9. The arrangement of any of claims 1 to 8, wherein the resiliently elastic biasing element comprises a spring.

10. The arrangement of any of claims 1 to 9, which includes a lock assembly (30) configured to releasably and selectively lock the seismic source assembly to the winch assembly.

11. The arrangement of claim 10 via claim 2, wherein the lock assembly comprises at least one solenoid lock configured to be controlled by the controller.

12. A drone configured for seismic surveying, said drone having a controller and comprising a seismic weight dropper arrangement in accordance with any of claims 1 to 11, said weight dropper arrangement controlled by said controller.

13. A method of seismic surveying, said method comprising the steps of:
providing a drone with a seismic weight dropper arrangement in accordance with any of claims 1 to 11;
selectively ejecting the seismic source assembly from the winch assembly when said drone is at a predetermined height above a surface so that the housing impacts said surface; and
taking seismic measurements.

## Patentansprüche

1. Anordnung (10) eines seismischen Fallgewichts für eine Drohne (8), wobei die Anordnung Folgendes umfasst:
eine Windenbaugruppe (12), die an der Drohne befestigbar ist und einen Aktor (14) und eine Spule (16) mit einem darauf aufwickelbaren Seil (18) umfasst; und
eine Baugruppe (20) einer konfigurierbaren seismischen Quelle, die ein Gehäuse (22) und eine Masse (24) umfasst, die über mindestens ein federnd elastisches Vorspannelement (26) innerhalb des Gehäuses aufgehängt ist, das einen vorbestimmten Elastizitätsmodul aufweist, um das Aufprallen der Masse auf das Gehäuse mit vorbestimmten Aufprallgrößen und einer vorbestimmten Anzahl von Aufprallen zu erleichtern, wenn das Gehäuse auf eine Oberfläche (28) aufprallt, wobei das Gehäuse und die Masse ferner dazu konfiguriert sind, eine seitliche Bewegung der Masse innerhalb des Gehäuses zu minimieren;
wobei die Baugruppe der seismischen Quelle mit dem Seil fest verbunden ist und der Aktor dazu konfiguriert ist, die Baugruppe der seismischen Quelle unter dem Einfluss von Schwerkraft aus einer vorbestimmten Höhe selektiv von der Drohne abzuwerfen, um das Aufprallen der Masse auf das Gehäuse zu erleichtern, wenn das Gehäuse nach einem solchen Abwerfen auf die Oberfläche aufprallt.

2. Anordnung nach Anspruch 1, wobei die Windenbaugruppe dazu konfiguriert ist, in Signalkommunikation mit einer Steuerung der Drohne angeordnet zu sein, wobei der Aktor dazu konfiguriert ist, durch die Steuerung gesteuert zu werden.

3. Anordnung nach einem der Ansprüche 1 oder 2, wobei die Windenbaugruppe dazu konfiguriert ist, an der Drohne befestigt zu sein, sodass die Windenbaugruppe unter einer solchen Drohne aufgehängt ist, um ein ungehindertes Abwerfen der Baugruppe der seismischen Quelle unter dem Einfluss von Schwerkraft zu erleichtern.

4. Anordnung nach einem der Ansprüche 1 bis 3, wobei der Aktor einen elektromechanischen Aktor, wie etwa einen Elektromotor, umfasst, um die Spule wirksam zu drehen, um das Seil auf die Spule aufzuwickeln.

5. Anordnung nach einem der Ansprüche 1 bis 4, wobei der Aktor eine Getriebeanordnung enthält, um eine Drehmomentübertragung zwischen dem Aktor und der Spule zu erleichtern.

6. Anordnung nach einem der Ansprüche 1 bis 5, wobei die Windenbaugruppe eine Kupplung oder Bremse umfasst, um eine Drehung der Spule zu steuern.

7. Anordnung nach einem der Ansprüche 1 bis 6, wobei die Baugruppe der seismischen Quelle eine Aufpralloberfläche an einem Boden des Gehäuses enthält.

8. Anordnung nach einem der Ansprüche 1 bis 7, wobei das Gehäuse ein metallisches Gehäuse umfasst und die Masse eine vorbestimmte metallische Masse umfasst.

9. Anordnung nach einem der Ansprüche 1 bis 8, wobei das federnd elastische Vorspannelement eine Feder umfasst.

10. Anordnung nach einem der Ansprüche 1 bis 9, die eine Verriegelungsbaugruppe (30) enthält, die dazu konfiguriert ist, die Baugruppe der seismischen Quelle lösbar und selektiv an der Windenbaugruppe zu verriegeln.

11. Anordnung nach Anspruch 10 über Anspruch 2, wobei die Verriegelungsbaugruppe mindestens eine Magnetverriegelung umfasst, die dazu konfiguriert ist, durch die Steuerung gesteuert zu werden.

12. Drohne, die für seismisches Untersuchen konfiguriert ist, wobei die Drohne eine Steuerung aufweist und eine Anordnung eines seismischen Fallgewichts nach einem der Ansprüche 1 bis 11 umfasst, wobei die Anordnung eines Fallgewichts durch die Steuerung gesteuert wird.

13. Verfahren zum seismischen Untersuchen, wobei das Verfahren die folgenden Schritte umfasst:
Versehen einer Drohne mit einer Anordnung eines seismischen Fallgewichts nach einem der Ansprüche 1 bis 11;
selektives Abwerfen der Baugruppe der seismischen Quelle von der Windenbaugruppe, wenn sich die Drohne in einer vorbestimmten Höhe über einer Oberfläche befindet, sodass das Gehäuse auf die Oberfläche aufprallt; und
Vornehmen seismischer Messungen.

## Revendications

1. Agencement de libération de masse sismique (10) pour un drone (8), ledit agencement comprenant :
un ensemble treuil (12) pouvant être fixé au drone et comprenant un actionneur (14) et une bobine (16) avec un câble (18) pouvant être enroulé sur celle-ci ; et
un ensemble source sismique configurable (20) comprenant un boîtier (22) et un poids (24) suspendu à l'intérieur dudit boîtier par le biais d'au moins un élément de sollicitation élastiquement résilient (26) qui a un module d'élasticité prédéterminé afin de permettre au poids de heurter le boîtier avec des amplitudes d'impact et un nombre d'impacts prédéterminés lorsque le boîtier heurte une surface (28), le boîtier et le poids sont en outre conçus pour minimiser le mouvement latéral du poids à l'intérieur du boîtier ;
dans lequel l'ensemble source sismique est solidaire du câble et l'actionneur est conçu de manière sélective pour larguer ledit ensemble source sismique du drone sous l'effet de la gravité à partir d'une hauteur prédéterminée afin de permettre au poids de heurter le boîtier lorsque le boîtier heurte la surface après un tel largage.

2. Agencement de la revendication 1, dans lequel l'ensemble treuil est conçu pour être agencé en communication de signal avec un dispositif de commande du drone, dans lequel l'actionneur est conçu pour être commandé par le dispositif de commande.

3. Agencement de l'une ou l'autre des revendications 1 ou 2, dans lequel l'ensemble treuil est conçu pour être fixé au drone de sorte que l'ensemble treuil soit suspendu au-dessous de ce drone pour permettre le largage sans entrave de l'ensemble source sismique sous l'effet de la gravité.

4. Agencement de l'une quelconque des revendications 1 à 3, dans lequel l'actionneur comprend un actionneur électromécanique, tel qu'un moteur électrique, pour faire tourner fonctionnellement la bobine afin d'enrouler le câble sur ladite bobine.

5. Agencement de l'une quelconque des revendications 1 à 4, dans lequel l'actionneur comprend un agencement d'engrenage pour permettre le transfert de couple entre l'actionneur et la bobine.

6. Agencement de l'une quelconque des revendications 1 à 5, dans lequel l'ensemble treuil comprend un embrayage ou un frein pour commander la rotation de la bobine.

7. Agencement de l'une quelconque des revendications 1 à 6, dans lequel l'ensemble source sismique comprend une surface d'impact au fond du boîtier.

8. Agencement de l'une quelconque des revendications 1 à 7, dans lequel le boîtier comprend un boîtier métallique et le poids comprend un poids métallique prédéterminé.

9. Agencement de l'une quelconque des revendications 1 à 8, dans lequel l'élément de sollicitation élastiquement résilient comprend un ressort.

10. Agencement de l'une quelconque des revendications 1 à 9, qui comprend un ensemble de verrouillage (30) conçu pour verrouiller de manière libérable et sélective l'ensemble source sismique sur l'ensemble treuil.

11. Agencement de la revendication 10 via la revendication 2, dans lequel l'ensemble de verrouillage comprend au moins un verrou à solénoïde conçu pour être commandé par le dispositif de commande.

12. Drone conçu pour la prospection sismique, ledit drone ayant un dispositif de commande et comprenant un agencement de libération de masse sismique selon l'une quelconque des revendications 1 à 11, ledit agencement de lâché de masse étant commandé par ledit dispositif de commande.

13. Procédé de prospection sismique, ledit procédé comprenant les étapes de :
fourniture à un drone d'un agencement de libération de masse sismique selon l'une quelconque des revendications 1 à 11 ;
largage sélectif de l'ensemble source sismique depuis l'ensemble treuil lorsque ledit drone est à une hauteur prédéterminée au-dessus d'une surface de sorte que le boîtier heurte ladite surface ; et
prise de mesures sismiques.
